# EUROPÄISCHE PATENTSCHRIFT

(11) **EP 3 807 965 B1**
(45) Veröffentlichungstag und Bekanntmachung des Hinweises auf die Patenterteilung: **30.07.2025**
(21) Anmeldenummer: 19742559.8
(22) Anmeldetag: 17.07.2019
(51) Int. Cl.: H02G 3/08

(54) **GEHÄUSE**
HOUSING
BOÎTIER

(30) Priorität: 18.07.2018 DE 102018117421
(43) Veröffentlichungstag der Anmeldung: 21.04.2021
(73) Patentinhaber: Schneider Electric Industries SAS, 92500 Rueil-Malmaison (FR)
(72) Erfinder: VICKTORIUS, Richard, 50733 Köln (DE); KRISHNAN, Suchint, 51674 Wiehl (DE)
(74) Vertreter: Manitz Finsterwald Patent- und Rechtsanwaltspartnerschaft mbB
(86) Internationale Anmeldenummer: PCT/EP2019/069269
(87) Internationale Veröffentlichungsnummer: WO 2020/016311

(56) Entgegenhaltungen:
- EP-A2- 1 722 453
- DE-A1- 102008 012 941
- DE-U- 1 703 386
- US-A- 1 646 622
- US-A- 4 758 180
- US-A- 4 825 339
- US-A- 5 191 171
- US-A- 6 103 973

## Beschreibung

Die vorliegende Erfindung bezieht sich auf ein Gehäuse nach dem Oberbegriff des Patentanspruchs 1 (vgl. EP 1 722 453 A2), durch dessen Gehäusewände Gegenstände durch zunächst verschlossene Öffnungen durch Heraustrennung von Ausbruchelementen in das Innere des Gehäuses eingeführt werden. Solche Gehäuse finden häufig Verwendung bei der Installation von elektrischen, optischen, hydraulischen und/oder pneumatischen Leitungen. Wandungsbauteile mit herausbrechbaren Einsätzen sind weiterhin aus der DE 10 2008 012 941 A1, der US 4,825,339 A, der US 6,103,973 A, der DE 17 03 386 U, der US 5,191,171 A, der US 4 758 180 A oder der US 1,646,622 A bekannt.

Beispielsweise werden derartige Gehäuse zum Anschließen elektrischer Geräte an elektrische Leitungen und/oder zum Verdrahten elektrischer Leitungen untereinander genutzt (vgl. EP 1 722 453 A2). Elektrische Geräte, wie beispielsweise Schalter, Steckdosen, Aktoren und/oder Sensoren, werden insbesondere im Rahmen von Hausinstallationssystemen in Gehäusen eingebaut und mittels entsprechender elektrischer Leitungen angeschlossen bzw. untereinander elektrisch verbunden. Die Gehäuse sind entweder in oder auf einer Unterkonstruktion, z. B. einer massiven Wand oder einer Hohlwandkonstruktion, angeordnet.

Um die elektrischen Leitungen bzw. entsprechende die Leitungen umhüllende Installationsrohre in das Innere der Gehäuse einführen zu können, sind in den Wänden der Gehäuse Öffnungen ausgebildet. Diese sind im Montagezustand mit Ausbruchelementen verschlossen, die der Monteur durch Druck oder durch Schneiden mit Hilfe von Werkzeugen heraustrennen kann.

Die Ausbruchelemente sind gegenüber der Gehäusewand teilweise freigeschnitten und in der Gehäusewand durch Stege oder definierte Sollbruchstellen befestigt, die durch den Monteur durchtrennbar sind. Nachteilig ist dabei, dass nach dem Durchtrennen der Stege oder der definierten Sollbruchstellen scharfkantige Rückstände in der entstehenden Auslassöffnung in der Gehäusewand verbleiben. Hierdurch können einerseits die Leitungen bzw. entsprechende Installationsrohre beim Einführen in das Innere des Gehäuses beschädigt werden und andererseits Verletzungen an den Fingern des Monteurs entstehen.

Die Aufgabe der vorliegenden Erfindung besteht deshalb darin, die vorstehend genannten Nachteile zu beseitigen und ein Gehäuse zu schaffen, das eine montagefreundliche Einführung und Befestigung von Leitungen bzw. entsprechender Installationsrohre in das Innere der Gehäuse ermöglicht, und das die Gefahr einer Verletzung des Monteurs bei der Montage verringert.

Gelöst wird diese Aufgabe durch die im Patentanspruch 1 angegebenen Merkmale.

Bei dem erfindungsgemäßen Gehäuse weist der Rand der Öffnung im Bereich des Stegs eine Ausbuchtung auf, in welcher der Steg befestigt ist. Mit anderen Worten ist der Rand der Öffnung nicht im Wesentlichen parallel zu der Außenkontur des Ausbruchelements ausgebildet, sondern der Rand der Öffnung weist im Bereich der Stegbefestigung eine Unstetigkeit in Form einer Ausbuchtung bzw. eines Rücksprungs auf. Dies bringt den Vorteil mit sich, dass nach Trennen des Stegs zum Entfernen des Ausbruchelements der üblicherweise stets an dem Gehäuse verbleibende Rückstand des Stegs, der scharfkantig ist und Verletzungen hervorrufen kann, innerhalb der Ausbuchtung gelegen ist. Hierdurch können Leitungen bzw. entsprechende Installationsrohre in das Innere des Gehäuses eingeführt werden, ohne den Leitungsmantel oder das Installationsrohr zu beschädigen oder Verletzungen des Monteurs hervorzurufen, da die scharfkantigen Reste des abgetrennten Stegs nicht in Kontakt mit Leitungen oder mit den Fingern des Monteurs gelangen.

Eine besonders gute und einfach handhabbare Trennung des Stegs wird dadurch erreicht, dass sich dieser schräg zur Ebene der die Ausbuchtung umgebenden Wand erstreckt.

Vorteilhafte Ausgestaltungen ergeben sich aus der Beschreibung, der Zeichnung sowie den Unteransprüchen.

Nach einer vorteilhaften Ausführungsform kann sich die Ausbuchtung von der Außenkontur des Ausbruchelements weg in Richtung der Wand erstrecken. Die Ausbuchtung ist in diesem Fall also nicht oder nicht nur in einer sich senkrecht zur Wand erstreckenden Richtung gebildet. Vielmehr ist die Ausbuchtung innerhalb derjenigen Ebene vorgesehen, die durch die (unter Umständen auch gekrümmt verlaufenden) Wandabschnitte gebildet ist, welche das Ausbruchelement umgeben. Mit anderen Worten muss bei dieser Ausführungsform die Ausbuchtung in der Ebene der Wand gebildet sein, wobei jedoch nicht ausgeschlossen ist, dass sich die Ausbuchtung zusätzlich auch quer zur Ebene der Wand erstreckt.

Nach einer weiteren vorteilhaften Ausführungsform kann das Ausbruchelement in Richtung des Gehäuseinneren oder aber auch in Richtung des Gehäuseäußeren versetzt sein, wodurch sich ein leichteres Abtrennen des Ausbruchelementes ergibt. Bei einer solchen Ausführungsform können beide Enden des Stegs in zueinander parallelen Ebenen liegen, wobei eine der Ebenen durch das Ausbruchelement und die andere Ebene durch den Rand der Öffnung gebildet ist.

Der Steg weist in der Ausbuchtung eine geringere Wandstärke bzw. einen verringerten Querschnitt auf, so dass das Heraustrennen vereinfacht wird und gleichzeitig eine definierte Bruchstelle innerhalb der Ausbuchtung gebildet wird. Dies wird dadurch begünstigt, dass der Steg ausschließlich in der Ausbuchtung einen verringerten Querschnitt aufweist. Hierdurch wird das Trennverhalten vorgegeben, so dass nachteilige Bruchstellen hinsichtlich der Lage und Geometrie vermieden werden. Die Gehäuse werden aus Kunststoffen gefertigt, die vorzugsweise insbesondere elektrisch vorteilhafte Isolationseigenschaften aufweisen.

Nach einer vorteilhaften Ausführungsform können mehrere Stege insbesondere gleichmäßig über den Umfang des Ausbruchelementes verteilt sein. Die Anzahl und die Positionierung der Stege entlang des Freischnittes kann dann so gewählt werden, dass im Montagezustand hinreichend gewährleistet ist, dass keine versehentliche Entfernung möglich ist. Vorteilhafterweise sind hierzu die Stege in gleichmäßigen Abständen verteilt, z. B. mittig und an den Enden eines Halbkreises.

Die Ausbruchelemente können insbesondere außerhalb der Ausbuchtung komplementär zum Rand der Öffnung bzw. zur Innenkontur der Gehäusewand ausgebildet sein, so dass der Freischnitt hinlänglich stabil bleibt, um das Eindringen von Gegenständen zu vermeiden und entsprechende Beschädigungen durch Verhaken zu verhindern. Die Ausbruchelemente können eine Vielzahl von Formen und Abmessungen aufweisen. Häufig sind es runde oder halbrunde Formen, die der Querschnittform von Leitungen und Rohren entsprechen, oder Rechteckformen für Kabelkanäle.

Je nach Ausführungsform können die Ausbruchelemente irreversibel aus der Gehäusewand trennbar sein oder beispielsweise durch ein Filmscharnier über eine Bewegungsachse weiterhin mit der Gehäusewand verbunden bleiben, beispielsweise um später wieder verschlossen zu werden.

Die Gehäuse können modular oder nicht modular aufgebaut sein und aus Einzelteilen zu einem Gehäuse oder einem Gehäusekomplex zusammengebaut werden. Häufig werden Gehäusewände auch als Ergänzungsbauteile eingebaut, in denen die erfindungsgemäßen Ausbruchelemente realisiert werden können.

Grundsätzlich bezieht sich die vorliegende Erfindung auf Gehäuse im Allgemeinen, vorzugsweise auf Gehäuse zum Installieren und Verdrahten elektrischer Geräte. Elektrische Geräte, wie beispielsweise Schalter, Steckdosen, Aktoren und/oder Sensoren, werden insbesondere im Rahmen von Hausinstallationssystemen in Gehäusen eingebaut und mittels entsprechender elektrischer Leitungen angeschlossen bzw. untereinander elektrisch verbunden. In den Gehäusen können ein oder mehrere Geräte angeordnet sein.

Nach einer weiteren vorteilhaften Ausführungsform können zwei ineinander integrierte Ausbruchelemente vorgesehen sein, um Öffnung für Leitungen mit verschiedenen Durchmessern zu ermöglichen. Hierbei ist erfindungsgemäß vorgesehen, dass ein zweites, in das erste Ausbruchelement integrierte weiteres Ausbruchelement in gleicher Weise wie das erste Ausbruchelement gestaltet ist, und dass auch die durch das zweite Ausbruchelement zunächst verschlossene Öffnung auf gleiche Weise wie die erste Öffnung gestaltet ist, nämlich eine Ausbuchtung aufweist, in welcher ein zweiter Steg des zweiten Ausbruchelements befestigt ist. Hierdurch ergeben sich auch für die zweite Öffnung die vorstehend beschriebenen Vorteile.

Weitere Einzelheiten, Merkmale und Vorteile der Erfindung ergeben sich aus nachfolgender Beschreibung eines bevorzugten Ausführungsbeispiels anhand der Zeichnungen.

Es zeigen:
- Fig. 1: eine perspektivische Vorderansicht eines Gehäuses,
- Fig. 2: eine perspektivische Rückansicht des Gehäuses von Fig. 1,
- Fig. 3: eine Ansicht von außen auf ein Ausbruchelement des Gehäuses von Fig. 1 und 2,
- Fig. 4: eine Ansicht von innen auf das Ausbruchelement von Fig. 3,
- Fig. 5: eine vergrößerte Teilansicht von Fig. 3 mit herausgetrenntem Ausbruchelement, und
- Fig. 6: einen Teilschnitt entlang der Linie VI-VI von Fig. 4.

Der Aufbau des erfindungsgemäßen Gehäuses wird anhand der Figuren näher beschrieben, wobei gleiche oder gleichwirkende Bauteile in der nachfolgenden Beschreibung mit gleichen Bezugszeichen versehen sind.

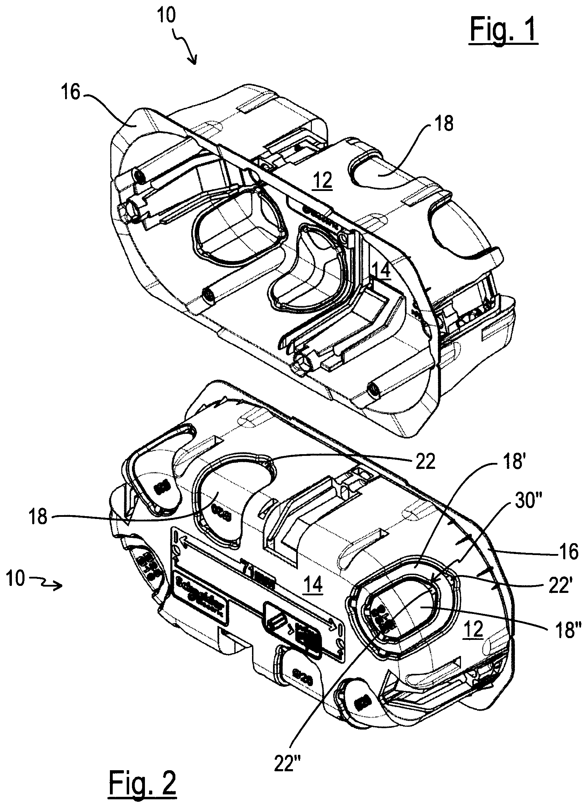

Die in den Fig. 1 und 2 dargestellte Ausführungsform eines Gehäuses 10 dient zur Aufnahme von elektrischen Installationsgeräten und umfasst einen von einer Umfangswand 12 und einer Rückwand 14 gebildeten Aufnahmeraum. Das Gehäuse 10 weist eine rennbahnförmige Umfangskontur auf, ist einstückig aus Kunststoff hergestellt und weist an seiner nach vorne hin offenen Vorderseite einen an die Seitenwand 12 angeformten Montageflansch 16 auf.

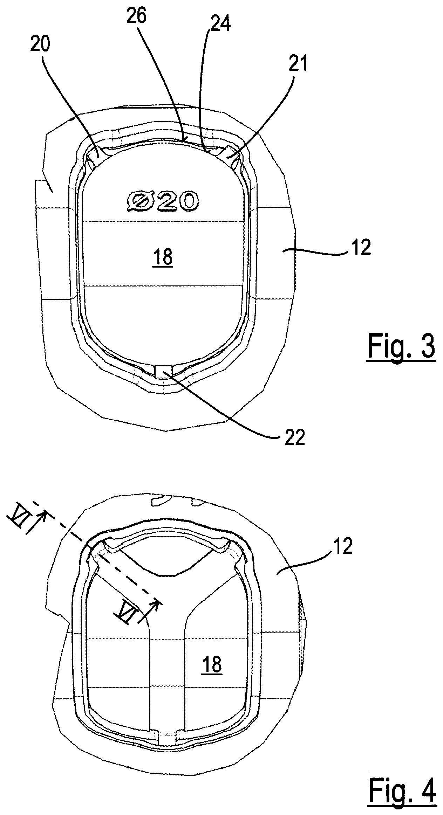

Das Gehäuse 10 weist ferner eine Vielzahl von vordefinierten Öffnungen auf, die das Einführen von elektrischen Leitern oder von Rohren ermöglichen, um ein in dem Gehäuse anzuordnendes elektrisches Installationsgerät anzuschließen. In dem dargestellten Auslieferungszustand ist jede Öffnung mit einem entfernbaren Ausbruchelement verschlossen, dessen nähere Beschreibung nachfolgend exemplarisch anhand des in Fig. 1 und 2 dargestellten Ausbruchelements 18 erfolgt, das in Fig. 3 und Fig. 4 vergrößert dargestellt ist.

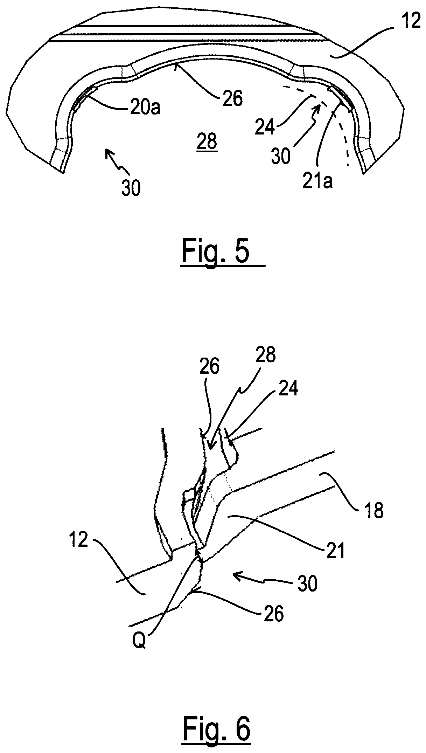

Wie insbesondere Fig. 3 verdeutlicht, ist das Ausbruchelement 18 mit Ausnahme dreier Stege 20, 21 und 22 gegenüber der umgebenden Wand 12 freigeschnitten und nur über die Stege mit der Wand 12 verbunden. Hierbei sind die Stege 20, 21 und 22 zwischen der Außenkontur 24 des Ausbruchelements 18 und dem Rand 26 (vgl. auch Fig. 6) der Öffnung 28 (Fig. 5) vorgesehen, die im Auslieferungszustand durch das Ausbruchelement 18 verschlossen ist. Wie dabei insbesondere Fig. 5 verdeutlicht, weist der Rand 26 der Öffnung 28 im Bereich jedes Stegs eine Ausbuchtung 30 auf, in welcher der Steg (im Auslieferungszustand - vgl. Fig. 3) befestigt ist. Nach einem Abtrennen bzw. Ausbrechen des Ausbruchelements 18 ist die Öffnung 28 (Fig. 5) frei zugänglich und in den Ausbuchtungen 30 befinden sich lediglich scharfkantige Rückstände 20a und 21a der Stege 20 und 21.

Wie insbesondere Fig.5 verdeutlicht, erstreckt sich jede Ausbuchtung 30 von der in Fig. 5 gestrichelt angedeuteten Außenkontur 24 des Ausbruchelements 18 weg in Richtung der Wand 12 und jede Ausbuchtung 30 ist in der (Material-)Ebene der Wand 12 gebildet. Weiterhin verdeutlicht Fig. 3, dass der Rand 26 der Öffnung 28 außerhalb der Ausbuchtungen 30 im Wesentlichen komplementär zu der Außenkontur 24 des Ausbruchelements 18 ausgebildet ist. Über den Umfang des Ausbruchelements 18 sind die drei Stege 20, 21 und 22 annähernd gleichmäßig verteilt und jede Ausbuchtung 30 ist erfindungsgemäß konkav gekrümmt, wodurch sich im Bereich jeder Ausbuchtung jeweils vier Wendepunkte im Rand 26 der Öffnung ergeben.

Ein Vergleich der Fig. 1 und Fig. 2 verdeutlicht weiterhin, dass jedes Ausbruchelement 18 in Richtung des Inneren des Gehäuses 10 versetzt ist. Dies kann beispielsweise dadurch erreicht werden, dass die beiden Enden jedes Stegs (vgl. Steg 21 in Fig. 6) in zueinander parallelen Ebenen liegen bzw. in einer Richtung senkrecht zur Wand 12 beabstandet sind.

Anhand von Fig. 6 ist ferner erkennbar, dass sich jeder Steg schräg zur Ebene der die Ausbuchtung 30 umgebenden Wand 12 erstreckt und dass der Steg ausschließlich in der Ausbuchtung 30, einen verringerten Querschnitt Q aufweist.

Fig. 2 zeigt weiterhin eine zweite Variante eines (in Fig. 1 nicht erkennbaren) Ausbruchelements 18'. Dieses ist grundsätzlich in gleicher Weise aufgebaut und in die Gehäusewand eingebunden wie das vorstehend beschriebene Ausbruchelement 18. Allerdings ist in das Ausbruchelement 18' ein zweites Ausbruchelement 18" integriert, das einen kleineren Umfang und eine kleinere Fläche aufweist und insofern eine kleinere Öffnung verschließt. Das weitere Ausbruchelement 18" ist auf die gleiche Art und Weise mit dem ersten Ausbruchelement 18' verbunden wie das vorstehend beschriebene Ausbruchelement 18 mit der Wandung 12. Hierfür ist das weitere Ausbruchelement 18" gegenüber dem ersten Ausbruchelement 18' mit Ausnahme von drei Stegen 22" freigeschnitten und die Enden der Stege sind in dem ersten Ausbruchelement 18' wiederum in Ausbuchtungen 30" angeordnet. Hierdurch lässt sich durch Entfernen des weiteren Ausbruchelements 18" eine kleinere Öffnung in dem Gehäuse 10 herstellen, als durch Entfernen des ersten Ausbruchelements 18'.

Es versteht sich, dass die beschriebenen Ausbruchelemente gewinkelt (so wie dargestellt) oder auch gekrümmt oder planar ausgebildet sein können.

Zum Einführen von Adern, Leitungen oder Rohren in das Innere des Gehäuses 10 kann jedes Ausbruchelement 18, 18' oder 18" an den Stegen durch Herausdrücken, Heraushebeln oder Schneiden von dem umgebenden Material gelöst werden, so dass im Bereich der Ausbuchtungen 30 oder 30" lediglich Reste 20a, 21a (Fig. 5) der Stegansätze verbleiben. Diese Reste sind zwar scharfkantig, liegen jedoch in den Ausbuchtungen 30 oder 30", so dass weder Kabel noch Finger eines Monteurs verletzt werden können.

## Patentansprüche

1. Gehäuse (10) zum Installieren von Steckdosen, das einstückig aus Kunststoff hergestellt ist, umfassend einen zumindest teilweise von Wänden (12, 14) gebildeten Aufnahmeraum, wobei in mindestens einer der Wände (12, 14) ein eine Öffnung verschließendes Ausbruchelement (18; 18') vorgesehen ist, das zumindest teilweise gegenüber der Wand (12) freigeschnitten ist und das mittels zumindest eines Stegs (20 - 22; 22') mit der Wand (12) verbunden ist, der zwischen der Außenkontur (24) des Ausbruchelements (18; 18') und dem Rand (26) der Öffnung (28) vorgesehen sind, **dadurch gekennzeichnet, dass** der Rand (26) der Öffnung (28) im Bereich des Stegs (20 - 22; 22') eine konkav gekrümmte Ausbuchtung (30; 30") aufweist, in welcher der Steg befestigt ist,
dass der Steg (20 - 22; 22') ausschließlich in der Ausbuchtung (30; 30") einen verringerten Querschnitt (Q) aufweist, und
dass sich der Steg (20 - 22; 22') in der Ausbuchtung (30; 30") schräg zur Ebene der die Ausbuchtung (30; 30") umgebenden Wand erstreckt.

2. Gehäuse nach Anspruch 1, **dadurch gekennzeichnet, dass** sich die Ausbuchtung (30; 30") von der Außenkontur (24) des Ausbruchelements (18; 18') weg in Richtung der Wand (12) erstreckt.

3. Gehäuse nach Anspruch 1 oder 2, **dadurch gekennzeichnet, dass** die Ausbuchtung (30; 30") in der Ebene der Wand (12) gebildet ist.

4. Gehäuse nach zumindest einem der vorstehenden Ansprüche, **dadurch gekennzeichnet, dass**
der Rand (26) der Öffnung (28) außerhalb der Ausbuchtung (30; 30") komplementär zu der Außenkontur (24) des Ausbruchelementes (18; 18') ausgebildet ist.

5. Gehäuse nach zumindest einem der vorstehenden Ansprüche, **dadurch gekennzeichnet, dass**
das Ausbruchelement (18; 18') an der Wand (12) angelenkt ist.

6. Gehäuse nach zumindest einem der vorstehenden Ansprüche, **dadurch gekennzeichnet, dass**
mehrere Stege (20 - 22; 22') insbesondere gleichmäßig über den Umfang des Ausbruchelementes (18; 18'; 18") verteilt sind.

7. Gehäuse nach zumindest einem der vorstehenden Ansprüche, **dadurch gekennzeichnet, dass**
das Ausbruchelement (18; 18'; 18") in Richtung des Gehäuseinneren versetzt ist.

8. Gehäuse nach zumindest einem der vorstehenden Ansprüche, **dadurch gekennzeichnet, dass**
beide Enden des Stegs (20 - 22; 22') in zueinander parallelen Ebenen liegen.

9. Gehäuse nach zumindest einem der vorstehenden Ansprüche, **dadurch gekennzeichnet, dass**
das Ausbruchelement ein erstes Ausbruchelement (18') ist und dass in diesem ein eine zweite Öffnung verschließendes zweites Ausbruchelement (18") vorgesehen ist, das zumindest teilweise freigeschnitten ist und das mittels zumindest eines zweiten Stegs (22") mit dem ersten Ausbruchelement (18') verbunden ist, der zwischen der Außenkontur des zweiten Ausbruchelements (18") und dem Rand der zweiten Öffnung vorgesehen, wobei der Rand der zweiten Öffnung im Bereich des zweiten Stegs (22") eine zweite Ausbuchtung (30") aufweist, in der der zweite Steg (22") befestigt ist.

10. Gehäuse nach Anspruch 9, **dadurch gekennzeichnet, dass** sich die zweite Ausbuchtung (30") von der Außenkontur des zweiten Ausbruchelements (18") weg in Richtung des ersten Ausbruchelementes (18') erstreckt.

11. Gehäuse nach Anspruch 9 oder 10, **dadurch gekennzeichnet, dass** die zweite Ausbuchtung (30") in der Ebene des ersten Ausbruchelementes (18') gebildet ist.

12. Gehäuse nach zumindest einem der vorstehenden Ansprüche 9 -11, **dadurch gekennzeichnet, dass**
der zweite Steg (22") vorzugsweise ausschließlich in der zweiten Ausbuchtung (30") einen verringerten Querschnitt aufweist.

13. Gehäuse nach zumindest einem der vorstehenden Ansprüche 9 - 12, **dadurch gekennzeichnet, dass**
der Rand der zweiten Öffnung außerhalb der zweiten Ausbuchtung (30") komplementär zu der Außenkontur des zweiten Ausbruchelementes (18") ausgebildet ist.

14. Gehäuse nach zumindest einem der vorstehenden Ansprüche 9 - 13, **dadurch gekennzeichnet, dass**
das zweite Ausbruchelement (18") an dem ersten Ausbruchelement (18') angelenkt ist.

15. Gehäuse nach zumindest einem der vorstehenden Ansprüche 9 - 14, **dadurch gekennzeichnet, dass**
mehrere zweite Stege (30") insbesondere gleichmäßig über den Umfang des zweiten Ausbruchelementes (18") verteilt sind.

16. Gehäuse nach zumindest einem der vorstehenden Ansprüche 19 - 15, **dadurch gekennzeichnet, dass**
das zweite Ausbruchelement (18") in Richtung des Gehäuseinneren versetzt ist.

17. Gehäuse nach zumindest einem der vorstehenden Ansprüche 9 - 16, **dadurch gekennzeichnet, dass**
beide Enden des zweiten Stegs (30") in zueinander parallelen Ebenen liegen.

18. Gehäuse nach zumindest einem der vorstehenden Ansprüche 9 - 17, **dadurch gekennzeichnet, dass**
sich der zweite Steg (22") schräg zur Ebene der die zweite Ausbuchtung (30") umgebenden Fläche des ersten Ausbruchelementes (18') erstreckt.

## Claims

1. A housing (10) for installing sockets, which is produced in one piece from plastic, comprising a receiving space formed at least partly by walls (12, 14), wherein a break-out element (18; 18') closing an opening is provided in at least one of the walls (12, 14), which break-out element (18; 18') is at least partly cut free with respect to the wall (12) and is connected to the wall (12) by means of at least one web (20 - 22; 22') which is provided between the outer contour (24) of the break-out element (18; 18') and the margin (26) of the opening (28), **characterized in that** the margin (26) of the opening (28) has a concavely curved bulge (30; 30") in the region of the web (20 - 22; 22'), in which bulge the web is fastened,
**in that** the web (20 - 22; 22') has a reduced cross-section (Q) exclusively in the bulge (30; 30"), and
**in that** the web (20 - 22; 22') in the bulge (30; 30") extends obliquely to the plane of the wall surrounding the bulge (30; 30").

2. A housing according to claim 1, **characterized in that** the bulge (30; 30") extends away from the outer contour (24) of the break-out element (18; 18') towards the wall (12).

3. A housing according to claim 1 or 2, **characterized in that** the bulge (30; 30") is formed in the plane of the wall (12).

4. A housing according to at least one of the preceding claims, **characterized in that**
the margin (26) of the opening (28) outside the bulge (30; 30") is formed in a complementary manner to the outer contour (24) of the break-out element (18; 18').

5. A housing according to at least one of the preceding claims, **characterized in that**
the break-out element (18; 18') is connected in an articulated manner to the wall (12).

6. A housing according to at least one of the preceding claims, **characterized in that**
a plurality of webs (20 - 22; 22') are in particular uniformly distributed over the periphery of the break-out element (18; 18'; 18").

7. A housing according to at least one of the preceding claims, **characterized in that**
the break-out element (18; 18'; 18") is offset towards the housing interior.

8. A housing according to at least one of the preceding claims, **characterized in that**
both ends of the web (20 - 22; 22') lie in mutually parallel planes.

9. A housing according to at least one of the preceding claims, **characterized in that**
the break-out element is a first break-out element (18') and **in that** a second break-out element (18") closing a second opening is provided in said first break-out element (18'), which second break-out element (18") is at least partly cut free and is connected to the first break-out element (18') by means of at least one second web (22") which is provided between the outer contour of the second break-out element (18") and the margin of the second opening, with the margin of the second opening having a second bulge (30") in the region of the second web (22"), in which second bulge the second web (22") is fastened.

10. A housing according to claim 9, **characterized in that** the second bulge (30") extends away from the outer contour of the second break-out element (18") towards the first break-out element (18').

11. A housing according to claim 9 or 10, **characterized in that** the second bulge (30") is formed in the plane of the first break-out element (18').

12. A housing according to at least one of the preceding claims 9 to 11, **characterized in that**
the second web (22") preferably has a reduced cross-section exclusively in the second bulge (30").

13. A housing according to at least one of the preceding claims 9 to 12, **characterized in that**
the margin of the second opening outside the second bulge (30") is formed in a complementary manner to the outer contour of the second break-out element (18").

14. A housing according to at least one of the preceding claims 9 to 13, **characterized in that**
the second break-out element (18") is connected in an articulated manner to the first break-out element (18').

15. A housing according to at least one of the preceding claims 9 to 14, **characterized in that**
a plurality of second webs (30") are in particular uniformly distributed over the periphery of the second break-out element (18").

16. A housing according to at least one of the preceding claims 9 to 15, **characterized in that**
the second break-out element (18") is offset towards the housing interior.

17. A housing according to at least one of the preceding claims 9 to 16, **characterized in that**
both ends of the second web (30") lie in mutually parallel planes.

18. A housing according to at least one of the preceding claims 9 to 17, **characterized in that**
the second web (22") extends obliquely to the plane of the surface of the first break-out element (18') that surrounds the second bulge (30").

## Revendications

1. Boîtier (10) pour l'installation de prises de courant, qui est fabriqué d'une seule pièce en matière plastique, comprenant un espace de réception formé au moins partiellement par des parois (12, 14),
dans lequel un élément de rupture (18 ; 18') fermant une ouverture est prévu dans l'une au moins des parois (12, 14), lequel est au moins partiellement découpé par rapport à la paroi (12) et est relié à la paroi (12) au moyen d'au moins une nervure (20 - 22 ; 22') qui est formée entre le contour extérieur (24) de l'élément de rupture (18 ; 18') et le bord (26) de l'ouverture (28),
**caractérisé en ce que** le bord (26) de l'ouverture (28) présente, dans la zone de la nervure (20 - 22 ; 22'), un renflement (30 ; 30") à courbure concave dans lequel la nervure est fixée,
**en ce que** la nervure (20 - 22 ; 22') présente une section transversale réduite (Q) exclusivement dans le renflement (30 ; 30"), et
**en ce que** la nervure (20 - 22 ; 22') dans le renflement (30 ; 30") s'étend en oblique par rapport au plan de la paroi entourant le renflement (30 ; 30").

2. Boîtier selon la revendication 1,
**caractérisé en ce que** le renflement (30 ; 30") s'étend à partir du contour extérieur (24) de l'élément de rupture (18 ; 18') en direction de la paroi (12).

3. Boîtier selon la revendication 1 ou 2,
**caractérisé en ce que** le renflement (30 ; 30") est formé dans le plan de la paroi (12).

4. Boîtier selon l'une au moins des revendications précédentes, **caractérisé en ce que** le bord (26) de l'ouverture (28) est complémentaire du contour extérieur (24) de l'élément de rupture (18 ; 18'), à l'extérieur du renflement (30 ; 30").

5. Boîtier selon l'une au moins des revendications précédentes, **caractérisé en ce que** l'élément de rupture (18 ; 18') est articulé sur la paroi (12).

6. Boîtier selon l'une au moins des revendications précédentes, **caractérisé en ce que** plusieurs nervures (20 - 22 ; 22') sont réparties, en particulier de manière régulière, sur le pourtour de l'élément de rupture (18 ; 18' ; 18").

7. Boîtier selon l'une au moins des revendications précédentes, **caractérisé en ce que** l'élément de rupture (18 ; 18' ; 18") est décalé en direction de l'intérieur du boîtier.

8. Boîtier selon l'une au moins des revendications précédentes, **caractérisé en ce que** les deux extrémités de la nervure (20 - 22 ; 22') sont situées dans des plans parallèles entre eux.

9. Boîtier selon l'une au moins des revendications précédentes, **caractérisé en ce que** l'élément de rupture est un premier élément de rupture (18') et **en ce qu'**il est prévu dans celui-ci un deuxième élément de rupture (18") fermant une deuxième ouverture, lequel est au moins partiellement découpé et est relié au premier élément de rupture (18') au moyen d'au moins une deuxième nervure (22") qui est prévue entre le contour extérieur du deuxième élément de rupture (18") et le bord de la deuxième ouverture, le bord de la deuxième ouverture présentant, dans la zone de la deuxième nervure (22"), un deuxième renflement (30") dans lequel la deuxième nervure (22") est fixée.

10. Boîtier selon la revendication 9,
**caractérisé en ce que** le deuxième renflement (30") s'étend à partir du contour extérieur du deuxième élément de rupture (18") en direction du premier élément de rupture (18').

11. Boîtier selon la revendication 9 ou 10,
**caractérisé en ce que** le deuxième renflement (30") est formée dans le plan du premier élément de rupture (18').

12. Boîtier selon l'une au moins des revendications précédentes 9 à 11, **caractérisé en ce que** la deuxième nervure (22") présente une section transversale réduite, de préférence exclusivement dans le deuxième renflement (30").

13. Boîtier selon l'une au moins des revendications précédentes 9 à 12, **caractérisé en ce que** le bord de la deuxième ouverture est complémentaire du contour extérieur du deuxième élément de rupture (18"), à l'extérieur du deuxième renflement (30").

14. Boîtier selon l'une au moins des revendications précédentes 9 à 13, **caractérisé en ce que** le deuxième élément de rupture (18") est articulé sur le premier élément de rupture (18').

15. Boîtier selon l'une au moins des revendications précédentes 9 à 14, **caractérisé en ce que** plusieurs deuxièmes nervures (30") sont réparties, en particulier de manière régulière, sur le pourtour du deuxième élément de rupture (18").

16. Boîtier selon l'une au moins des revendications précédentes 9 à 15, **caractérisé en ce que** le deuxième élément de rupture (18") est décalé en direction de l'intérieur du boîtier.

17. Boîtier selon l'une au moins des revendications précédentes 9 à 16, **caractérisé en ce que** les deux extrémités de la deuxième nervure (30") sont situées dans des plans parallèles entre eux.

18. Boîtier selon l'une au moins des revendications précédentes 9 à 17, **caractérisé en ce que** la deuxième nervure (22") s'étend en oblique par rapport au plan de la surface du premier élément de rupture (18') entourant le deuxième renflement (30").
